# EUROPÄISCHE PATENTSCHRIFT

(11) **EP 2 072 223 B1**
(45) Veröffentlichungstag und Bekanntmachung des Hinweises auf die Patenterteilung: **03.07.2013**
(21) Anmeldenummer: 08172044.3
(22) Anmeldetag: 17.12.2008
(51) Int. Cl.: B29C 67/00

(54) **Vorrichtung und Verfahren zur Herstellung von dreidimensionalen Objekten aus verschiedenartigen Materialien und/oder mit verschiedenartigen Strukturen mittels Rapid Prototyping / Rapid Manufacturing**
Device and method for producing three dimensional objects from materials of various types and/or various types of structures by means of rapid prototyping / rapid manufacturing
Dispositif et procédé destinés à la fabrication d'objets tridimensionnels à partir de différents matériaux et/ou différentes structures à l'aide d'un prototypage rapide / d'une fabrication rapide

(30) Priorität: 18.12.2007 DE 102007061499; 19.12.2007 DE 102007061788
(43) Veröffentlichungstag der Anmeldung: 24.06.2009
(73) Patentinhaber: John, Hendrik, 46569 Hünxe (DE)
(72) Erfinder: John, Hendrik, 46569 Hünxe (DE)
(74) Vertreter: CBDL Patentanwälte

(56) Entgegenhaltungen:
- WO-A-03/027960
- US-A- 5 768 134

## Beschreibung

### TECHNISCHES GEBIET DER ERFINDUNG

Die Erfindung betrifft eine Vorrichtung und ein Verfahren zur Herstellung von dreidimensionalen Objekten aus verschiedenartigen Materialien und/oder mit verschiedenartigen Strukturen mittels Rapid Prototyping / Rapid Manufacturing gemäß dem Oberbegriff von Anspruch 1 bzw. dem Oberbegriff von Anspruch 8. Die Erfindung betrifft auch ein Computerprogramm zur Steuerung einer entsprechenden Vorrichtung sowie ein mittels des erfindungsgemäßen Verfahrens und/oder der erfindungsgemäßen Vorrichtung hergestelltes dreidimensionales Objekt.

### HINTERGRUND DER ERFINDUNG

Auf dem Gebiet der Erfindung sind zahlreiche Verfahren und Vorrichtungen bekannt, um dreidimensionale Objekte mittels des sogenannten "Rapid Prototypings/ Rapid Manufacturings" herzustellen. Unter dem Begriff Rapid Prototyping werden verschiedene Verfahren wie z.B. Stereolithographie, selektives Lasersintern, Fused Deposition Modeling und Laminated Object Manufacturing verstanden. Auf all diese bekannten Verfahren wird hier ausdrücklich Bezug genommen und all diese Verfahren können bei der Umsetzung der Erfindung verwendet werden. Auf eine ausführliche Erläuterung dieser bekannten Verfahren wird jedoch zur Vermeidung unnötiger Wiederholungen verzichtet.

Allgemein wird bei den bekannten Verfahren ein flüssiges, festes oder gasförmiges Rohmaterial Schicht für Schicht auf einem Träger ausgehärtet, um ein dreidimensionales Objekt zu bilden. Bei manchen Verfahren liegt das Rohmaterial in flüssiger Form vor und wird durch gezielte Energieeinstrahlung z.B. mittels Laser partiell ausgehärtet. Bei anderen Verfahren wird das Rohmaterial durch Wärmeeinwirkung verflüssigt, dann gezielt auf einen Träger aufgespritzt zu werden, wo es von alleine aushärtet.

Die bekannten Verfahren und Vorrichtungen erlauben es jedoch lediglich, ein dreidimensionales Objekt aus einem einzigen Rohmaterial zu bilden. In der DE 199 57 370 A1 wird zwar bereits die theoretische Möglichkeit angesprochen, unterschiedliche Rohmaterialien, die sich aus unterschiedlichen Substanzen zusammensetzen, zu verwenden und beispielsweise einen flüssigen photopolymeren Kunststoff mit thermoplastischen Bestandteilen zu vermischen. Durch verschiedene Strahlungsquellen sollen dann die verschiedenen Substanzen in unterschiedlichen Bereichen jeder herzustellenden Schicht ausgehärtet werden können.

Ein wesentlicher Grund dafür, daß es bislang nicht gelungen ist, im Rapid Prototyping in einem Verfahrenszug Objekte, die in einer Schicht unterschiedliche Materialien enthalten, herzustellen, liegt an der äußerst komplizierten Objektbeschreibung der inneren Struktur des herzustellenden Objektes. Die bekannten Vorrichtung für das Rapid Prototyping besitzen jeweils eine sogenannte STL-Schnittstelle, die zur Bereitstellung geometrischer Information aus dreidimensionalen Datenmodellen dient. Die Abkürzung STL hat sich dabei mittlerweile derart durchgesetzt, daß gar nicht mehr klar ist, ob es sich um eine Abkürzung von "Surface Tessellation Language", "Standard Triangulation Language" oder "Standard Tessellation Language" handelt. Jedenfalls ist damit eine Beschreibung der Oberfläche eines Objektes durch Dreiecksfacetten (Parkettierung) gemeint. Jede Dreiecksfacette wird durch die Dreieckpunkte und die zugehörige Fläche normal des Dreiecks charakterisiert. Diese gesamten geometrischen Werte werden für die weitere Datenverarbeitung, z.B. das Positionieren eines Druckkopfes, benötigt.

Aufgrund der Tatsache, daß bei komplexen Strukturen mindestens drei Dreiecke, meistens vier, fünf oder mehr Dreiecke einen gemeinsamen Eckpunkt besitzen, wird jeder Punkt mehrfach aufgelistet. Zusätzlich wird die Flächenormale abgespeichert. Dies führt dazu, daß gerade bei komplexen, sehr feinen internen 3D-Strukturen, wie z.B. den Poren- oder Schwamm-Strukturen von Knochen, ein extrem hohes Datenaufkommen und somit ein enormer Rechenaufwand zu bewältigen ist, wie zum Beispiel bei einem Verfahren und einer Vorrichtung gemäß der WO 03/027960 A2, die die Merkmale des Oberbegriffs der Ansprüche 1 und 8 offenbart, wobei jedem Punkt in einer Struktur bestimmte Materialeigenschaften punktspezifisch zugeordnet werden.

Die bekannten Vorrichtungen und Verfahren zum Rapid Prototyping erlauben daher bislang nur eine Variation von Material und Porosität und werden durch ein extrem hohes Datenaufkommen und enormem Rechenaufwand, und damit verbundenen Zeitaufwand, gekennzeichnet.

### AUFGABE UND ZUSAMMENFASSUNG DER ERFINDUNG

Der Erfindung liegt die Aufgabe zu Grunde, ein Verfahren und eine Vorrichtung zur Herstellung eines dreidimensionalen Objektes aus verschiedenen Materialien und/oder mit verschiedenartigen Strukturen mittels Rapid Prototyping / Rapid Manufacturing anzugeben, die es erlauben, Objekte in effizienter Weise herzustellen, bei denen auch innerhalb einer Schicht verschiedene Materialien verwendet bzw. verschiedene Strukturen realisiert werden können. Die Aufgabe wird gelöst von einem Verfahren mit den Merkmalen des Anspruchs 1 bzw. einer Vorrichtung mit den Merkmalen des Anspruchs 8. Der nebengeordnete Anspruch 11 betrifft ein Computerprogramm zur Steuerung einer Vorrichtung für das Rapid Prototyping / Rapid Manufacturing

Weitere Einzelheiten und Vorteile der Erfindung ergeben sich aus der nachfolgenden rein beispielhaften und nicht-beschränkenden Beschreibung von Durchführungsformen des Verfahrens, im Zuge welcher auch Details einer entsprechenden Vorrichtung zur Durchführung des Verfahrens offenbart werden.

### KURZE BESCHREIBUNG DER ZEICHNUNG

- Fig. 1: zeigt ein Schaubild, in welchem schematisch bestimmte Aspekte einer ersten Durchführungsform des erfindungsgemäßen Verfahrens dargestellt sind.
- Fig. 2: zeigt ein Schaubild, in welchem schematisch bestimmte Aspekte einer zweiten Durchführungsform des erfindungsgemäßen Verfahrens dargestellt sind.
- Fig. 3: zeigt ein Schaubild, in welchem schematisch bestimmte Aspekte einer dritten Durchführungsform des erfindungsgemäßen Verfahrens dargestellt sind.

### BESCHREIBUNG BEVORZUGTER DURCHFÜHRUNGSFORMEN

Die Grundidee der Erfindung basiert darauf, an Stelle der bisherigen aufwendigen Beschreibung des herzustellenden Objektes durch Volumendatensätze wie insbesondere STL-Dateien das Objekt durch nachfolgend als Schalen bezeichnete Oberflächen zu beschreiben, die Volumina einschließen, in denen gleiche oder hochgradig ähnliche Strukturen vorliegen. Dadurch wird es möglich, z.B. das Knochenbälkchen, daß bei einer bekannten Repräsentation im STL-Format mit hinreichender Auflösung der Struktur ungefähr 10 Millionen Dreiecke und damit eine Dateigröße von ungefähr 500 MB benötigt, durch rund 1.000 Dreiecke zu beschreiben, wobei die entsprechende Datei dann nur eine Größe von ungefähr 0,5 MB besitzt.

Dabei kann zur Beschreibung eines herzustellenden Gesamtobjektes in unterschiedlicher Weise vorgegangen werden. So können die Subvolumina, die das Gesamtvolumen beschreiben, beschreibenden Volumendateien innerhalb einer einzigen komprimierten Datei zusammengefaßt werden, so daß sie im Verbund das Gesamtobjekt darstellen. Die komprimierte Datei kann leicht versandt und gespeichert werden. Zur weiteren Datenverarbeitung kann die komprimierte Datei dann wieder dekomprimiert und die Subvolumina Dateien in Verbund verarbeitet werden. Jeder Subvolumendatei können Prozeßparameter zugeordnet werden, auf die nachfolgend noch eingegangen wird.

Eine andere Vorgehensweise ist, innerhalb einer STL-Datei Schalen zu identifizieren, die Subvolumina gleicher Struktur umfassen. Bei der Weiterverarbeitung werden dann die Schalen identifiziert und es werden ihnen entsprechende Prozeßparameter, auf die wie gesagt nachfolgend noch eingegangen wird, zugeordnet.

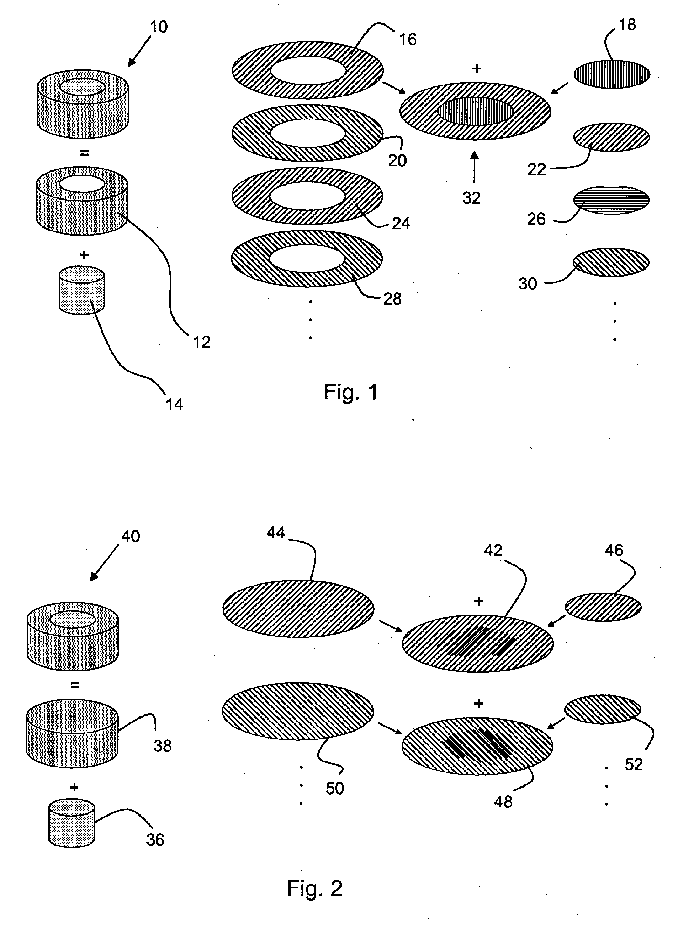

In der Fig. 1 ist schematisch eine erste Durchführungsform eines erfindungsgemäßen Verfahrens dargestellt. Bei dem zur Verdeutlichung gewählten Beispiel geht es darum, ein in seiner Gesamtheit mit 10 bezeichnetes Objekt herzustellen, das aus zwei einander nicht durchdringenden / nicht überlappenden Schalen 12 und 14 aus jeweils unterschiedlichen Materialien besteht.

Zur Herstellung dieses Objektes 10 wird bei diesem Ausführungsbeispiel eine hier nicht gezeigte Vorrichtung mit mehreren Dosierköpfen verwendet, die mit unterschiedlichen Materialien beladen werden. Eine solche Vorrichtung kann man sich nach Art eines Tintenstrahldruckers oder eines Dosiersystems ausgebildet vorstellen. Schichtweise werden nun, wie in Fig. 1 stark schematisiert dargestellt, aus den beiden unterschiedlichen Materialien Schichten 16, 18, ..., 28, 30 mit jeweils unterschiedlichen Dosiermustern gebildet, wobei die Muster innerhalb derselben Schale gleich bleiben, jedoch zueinander verdreht werden, um einen stabilen dreidimensionalen Aufbau zu gewährleisten (würde in jeder Schicht das Material mit der gleichen Orientierung aufgebracht werden, so fände keine Querverbindung benachbarter Materialstränge statt), wobei in einer Ebene jeweils zwei Schichten, im dargestellten Beispiel die Schichten 16 und 18, eine Schicht 32 des gewünschten Objektes 10 bilden. Dabei ist in der schematischen Darstellung der Fig. 1 im rechten Bereich von oben nach unten die zeitliche Abfolge der Produktion der einzelnen Schichten dargestellt (und nicht etwa deren räumlicher Aufbau), das heißt, daß zunächst die Schichten 16 und 18 hergestellt werden, auf die dann die Schichten 20 und 22 aufgebracht werden.

Die Fig. 2 zeigt eine andere Durchführungsvariante, bei der sich zwei Schalen 36 und 38 durchdringen, das fertige Objekt 40 also aus einem Bereich, in der Zeichnung mit 38 bezeichnet, besteht, in dem eine erste Struktur und ein erstes Material vorliegen, und einem Bereich, in der Figur mit 36 bezeichnet, in dem sowohl das erste als auch das zweite Material vorhanden sind. Im rechten Bereich der schematischen Darstellung der Fig. 2 sind wiederum von oben nach unten die zeitlichen Produktionsschritte dargestellt, das heißt, es wird also zunächst eine Schicht 42 aus den beiden Schichten 44 und 46 gebildet, worauf dann eine Schicht 48 bestehend aus den Schichten 50 und 52 gebildet wird. Wiederum werden, wie bei Fig. 1 erwähnt, die Dosiermuster innerhalb der Schichten zueinander verdreht, um einen stabilen dreidimensionalen Aufbau zu gewährleisten.

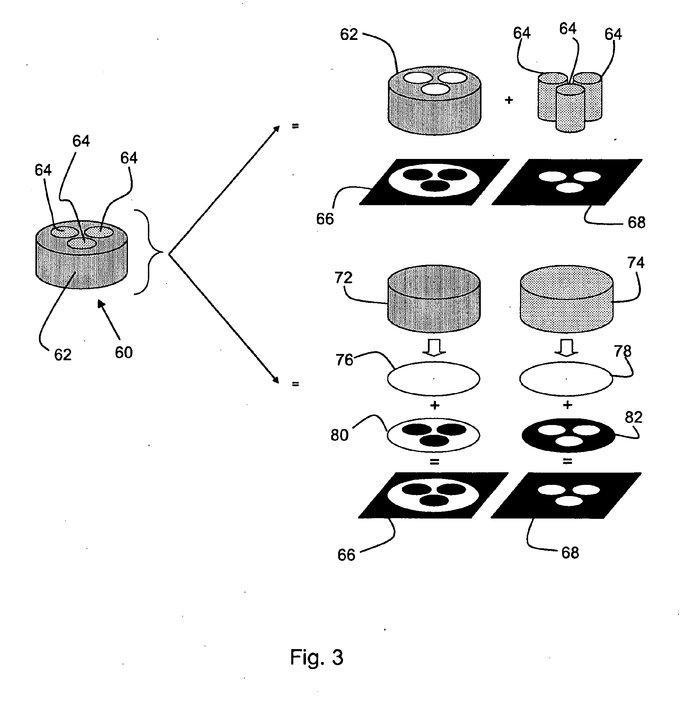

Die Fig. 3 zeigt schematisch zwei Lösungsansätze, wie ein dreidimensionales Objekt 60, bei diesem Ausführungsbeispiel bestehend aus einem Zylinder 62 aus einem ersten Material und drei in dem ersten Zylinder 62 liegenden Zylindern 64 aus einem zweiten Material mittels Photopolymerisation und Maskenbelichtung hergestellt werden kann. Gemäß dem schematisch in dem rechten oberen Bereich der Fig. 3 dargestellten Lösungsansatz werden einzelne Zylinder mit entsprechenden Belichtungsmasken 66 und 68 hergestellt. Gemäß dem in dem rechten unteren Bereich der Fig. 3 schematisch dargestellten Lösungsansatz werden zwei Schalen 72 und 74 betrachtet, die einander durchdringen, um das Gesamtobjekt 60 zu bilden. Das Konturbild 76 bzw. 78 einer Schicht innerhalb einer Schale wird also von der äußeren Kontur der Schale bestimmt. Jeder Schicht 76 und 78 ist aber eine unterschiedliche Füllung 80 bzw. 82 mit einer unterschiedlichen Textur / einem unterschiedlichen Muster zugeordnet. Die Belichtungsmasken für die jeweilige Schicht entsprechen den Belichtungsmasken 66 und 68. Dem Datensatz einer bestimmten Schale wird also eine Materialinformation und eine bestimmte Textur als Füllung zugeordnet. Wählt man eine besondere Abfolge der Texturen über den kompletten Schichtdatensatz einer Schale, können gezielt poröse Strukturen oder Gitterstrukturen in Form eines Fachwerks oder Gerüsts erzeugt werden. So können Leichtbaustrukturen auf einfachste Weise umgesetzt werden. Für jede neue Materialanforderung für die Querschnittsfläche einer Schale innerhalb derselben Schicht wird bei Bedarf der bis dahin generierte Abschnitt des Objektes gereinigt, und es wird das entsprechend geforderte Material der Bauebene zugeführt. Bei laserbasierten bzw. punktuellen aushärtenden Systemen können an Stelle der Textur entsprechende Schraffuralgorithmen eingesetzt werden.

Zur Erzeugung eines erfindungsgemäßen Datensatzes kann so vorgegangen werden, daß eine das Objekt beschreibende STL-Datei eingelesen und dann entweder schichtweise oder für das Gesamtvolumen die Schalen identifiziert und entsprechende Außen- und Innenkonturen je Schale erzeugt werden. In einer Schichtdatei, die die Information von einer einzelnen Schicht enthält, können dann sämtliche Außen- und Innenkonturen aller Schalen abgelegt werden. Alternativ können die Konturen jeweils einer Schale in schalenzugehörigen Schichtdateien abgelegt werden. Die Texturinformationen der einzelnen Schalen sind dann über die Schichten korreliert. Der Schichtdatensatz jeder Schale bzw. eine Kennung der als zusammengehörig bezeichneten Außen- und Innenkonturen enthält die Information über das zu verwendende Material, die geforderte innere Struktur (innerhalb der Außen- und Innenkontur), also der Textur, und weitere Prozeßparameter wie z.B. Schichtdicke, Belichtungszeit etc.

Beim schichtweisen Generieren wird bei jeder Schicht überprüft, wie viele Datensätze in Abhängigkeit der dieser Schicht schneidenden Schalen vorliegen. Diese Schichtdatensätze können dann nacheinander abgearbeitet werden. Die Schichtdaten von Schalen mit denselben Parametern können innerhalb eines Schichtdatensatzes zusammengefaßt werden.

Liegen bereits STL-Dateien zur Beschreibung der einzelnen Subvolumina, also z.B. zur Beschreibung der Schalen A und B in den Fig. 1 und 2, vor, kann bei einer möglichen Durchführungsform des erfindungsgemäßen Verfahrens wie folgt vorgegangen werden:
1. Einlesen eines dreidimensionalen Objektes in Form von zusammengesetzten, ineinandergeschachtelten STL-Dateien, wobei die STL-Dateien innerhalb ein und desselben Koordinatensystem angeordnet sind und zur Komprimierung und eindeutigen Zuordnung in einer Komprimierungsdatei ZIP oder RAR zusammengefaßt sind.
2. Die ZIP/RAR-Datei wird importiert und entpackt; dabei werden die zusammengehörigen STL-Dateien in einem temporären Verzeichnis abgelegt.
3. Es wird eine Tabelle erzeugt, in der die STL-Dateien zu dem jeweiligen Objekt zugehörig aufgelistet werden und in der der Anwender der jeweiligen STL-Datei einen Dosierparameterdatensatz zuordnen kann.
4. Die STL-Dateien werden alle in demselben Koordinatensystem geschnitten, somit entstehen pro Schnittebene mehrere Außen- und Innen-Konturen (Schnittflächen), die jeweils einer STL-Datei und somit einem ausgewählten Dosierparameterdatensatz zugeordnet werden.
5. Ggf. offene Konturen werden mittels an sich bekannter Verfahren geschlossen.
6. Es wird geprüft, ob die pro Schicht verwendeten Dosierparameterdatensätze jeweils dieselbe Schichtdicke aufweisen. Bei Bedarf wird eine Fehlermeldung ausgegeben.
7. Die entsprechende Schnittebene von jeder STL-Datei kann in einem Stapel abgelegt sein und nacheinander abgerufen werden so daß Dosierparameter Dosierpfade an die eingesetzte Vorrichtung übergeben werden können.

Die Erfindung hat besondere Vorteile bei der Herstellung von Medizinprodukten wie z.B. Zahnimplantaten oder Implantaten für Weich- und/oder Hartgewebe (Knorpel). Bei Zahnimplantaten kann die dreidimensionale Schichtung der einzelnen Zahnschichten naturgetreu nachgebildet werden, um so eine natürliche Transluzenz und Ästhetik zu erreichen. Bei Implantaten für Weich- und Hartgewebe kann die externe und interne Implantatstruktur sowohl materialseitig als auch strukturseitig dreidimensional dem Originalgewebe nachgebildet werden und es kann auch ein Materialverbund zur Imitation z.B. eines Knorpel-Knochen-Verbunds generiert werden. Auch erlaubt es die Erfindung, z.B. Zellen innerhalb eines Hydrogels in einem Gerüst aus thermoplastischem Polymer zu plazieren.

Ein weiterer erfindungsgemäßer Vorteil ist, daß dann, wenn sich herausstellt, daß ein hergestelltes Objekt zwar die gewünschte Form, aber noch nicht die gewünschte innere Struktur besitzt, die sogenannten Prozeßparameter einfach verändert werden können, um in den Schichten unterschiedliche Texturen und damit unterschiedliche interne Strukturen des Objektes zu erzeugen. Bei bisherigen Verfahren wäre dazu eine aufwendige komplette Neugenerierung des objektbeschreibenden Volumendatensatzes notwendig.

Die sogenannten Prozeßparameter umfassen z.B. dann, wenn zum Rapid Prototyping eine Vorrichtung verwendet wird, bei der aushärtende Materialien über Dosierköpfe bzw. einen Dosierkopf mit mehreren Auslässen dosiert wird, Informationen wie dosiertes Material, Verarbeitungstemperatur des Materials, Bahngeschwindigkeit beim Dosieren, Geschwindigkeit für Strangabriß, Dosierdruck, Dosierdüsentyp, Dosierdüsenlänge, Dosierdüseninnendurchmesser, Schichtdicke, Dosiermuster (Textur oder Schraffur) also z.B. Strangabstand in Y-Richtung, Strangabstand in X-Richtung, Versatz in X-Richtung, Versatz in Y-Richtung, Rotationsraster etc.

Im Rahmen des Erfindungsgedankens sind zahlreiche Abwandlungen und Weiterbildungen möglich, die sich z.B. auf die Ausgestaltung des zur Beschreibung des herzustellenden Objektes verwendeten Datensatz beziehen. Wichtig ist die Idee, ein herzustellendes Objekt nicht über eine Vielzahl von Einzelinformationen zu beschreiben, sondern dadurch, daß innerhalb des herzustellenden Objektes Subvolumina identifiziert werden, in welchen Materialien mit gleicher Struktur vorliegen und diese Subvolumina dann durch die sie einhüllende Oberfläche und die Zuordnung spezieller, die Struktur beschreibender Strukturinformationen zu den Subvolumina zu beschreiben.

## Patentansprüche

1. Verfahren zur Herstellung eines dreidimensionalen Objektes (10, 40, 60) aus verschiedenen Materialien und/oder mit verschiedenartigen Strukturen (12, 14, 36, 38, 62, 64) mittels Rapid Prototyping / Rapid Manufacturing,
- wobei das Objekt aus einem ersten Rohmaterial und mit einer ersten Struktur (16, 20, 24, 28, 44, 50) schichtweise dadurch aufgebaut wird, daß Rohmaterial an bestimmten Stellen innerhalb einer Schicht zur Aushärtung gebracht wird,
- wobei die Stellen, an denen Rohmaterial zur Aushärtung gebracht werden soll, in einem Datensatz festgelegt sind und
- wobei wenigstens in bestimmten Schichten wenigstens ein weiteres Rohmaterial oder eine andere Struktur (18, 22, 26, 30, 46, 52) zusätzlich zu dem ersten Rohmaterial bzw. zu der ersten Struktur zum Aufbau des Objektes verwendet wird,
**dadurch gekennzeichnet,**
- **daß** der Datensatz auf einer Beschreibung des herzustellenden Objektes durch Oberflächen von Volumina gleicher Struktur und Zuordnung von Strukturparametern zu den Oberflächen beruht und aus einer einzigen komprimierten Datei besteht.

2. Verfahren nach Anspruch 1, **dadurch gekennzeichnet, daß** der Datensatz für jede herzustellende Schicht (32, 42, 48) Informationen über die Kontur einer mit einem bestimmten Rohmaterial zumindest partiell auszufüllenden Fläche enthält.

3. Verfahren nach Anspruch 2, **dadurch gekennzeichnet, daß** in dem Datensatz jeder Fläche einer Schicht eine bestimmte Textur zugeordnet ist, die die Materialverteilung oder Aushärtung in der Fläche bestimmt.

4. Verfahren nach einem der Ansprüche 1 bis 3, **dadurch gekennzeichnet, daß** der Datensatz aus einem vorhandenen, das Objekt beschreibenden Volumendatensatz, insbesondere einer STL-Datei dadurch gewonnen wird, daß Subvolumina gleicher Struktur ermittelt oder definiert werden.

5. Verfahren nach einem der Ansprüche 1 bis 4, **dadurch gekennzeichnet, daß** die wenigstens zwei Rohmaterialien mittels einer der Anzahl von Rohmaterialien entsprechenden Anzahl von Düsen auf oder in einen Träger aufgebracht bzw. eingebracht werden.

6. Verfahren nach einem der Ansprüche 1 bis 5, **dadurch gekennzeichnet, daß** wenigstens eines der Rohmaterialien ein pastöses oder durch Temperaturänderung verflüssigbares Material ist.

7. Verfahren nach einem der Ansprüche 1 bis 6, **dadurch gekennzeichnet, daß** wenigstens eines der Rohmaterialien ein flüssiges, durch Zufuhr von Energie insbesondere in Form elektromagnetischer Wellen aushärtbares Material ist.

8. Vorrichtung zur Herstellung eines dreidimensionales Objektes (10, 40, 60) aus verschiedenen Materialien und/oder mit verschiedenartigen Strukturen (12, 14, 36, 38, 62, 64) mittels Rapid Prototyping / Rapid Manufacturing,
- wobei die Vorrichtung zum schichtweisen Aufbauen des Objektes aus einem ersten Rohmaterial (16, 20, 24, 28, 44, 50) ausgebildet ist und Rohmaterial an bestimmten Stellen innerhalb einer Schicht zur Aushärtung bringen kann,
- wobei die Vorrichtung über einen Datensatz automatisch gesteuert wird, in welchem die Stellen, an denen Rohmaterial zur Aushärtung gebracht werden soll, festgelegt sind und
- wobei die Vorrichtung wenigstens in bestimmten Schichten wenigstens ein weiteres Rohmaterial oder eine andere Struktur (18, 22, 26, 46, 52) zusätzlich zu dem ersten Rohmaterial bzw. zu der ersten Struktur zum Aufbau des Objektes aufbringen und ggf. aushärten kann und
**dadurch gekennzeichnet,**
- **daß** der Datensatz auf einer Beschreibung des herzustellenden Objektes durch Oberflächen von Volumina gleicher Struktur und Zuordnung von Strukturparametern zu den Oberflächen beruht und aus einer einzigen komprimierten Datei besteht.

9. Vorrichtung nach Anspruch 8, **dadurch gekennzeichnet, daß** eine Anzahl von Düsen zur Aufbringung von Rohmaterial auf einen Träger zwecks Ausbildung des herzustellenden Objektes vorgesehen ist, die der Anzahl von zu verwendenden Rohmaterialien entspricht.

10. Vorrichtung nach Anspruch 8, **dadurch gekennzeichnet, daß** Mittel zum Zuführen von Energie insbesondere in Form elektromagentischer Wellen zur Aushärtung eines zur Herstellung des Objektes verwendeten Rohmaterials vorgesehen sind.

11. Computerprogramm zur Steuerung einer Vorrichtung nach einem der Ansprüche 8 bis 10, **dadurch gekennzeichnet, daß** das Computerprogramm Steuerbefehle zur Ausführung eines Verfahrens nach einem der Ansprüche 1 bis 7 enthält.

## Claims

1. A method for manufacturing a three-dimensional object (10, 40, 60) from materials of various types and/or with various types of structures (12, 14, 36, 38, 62, 64) by means of rapid prototyping / rapid manufacturing,
- wherein the object is constituted layer by layer from a first raw material and with a first structure (16, 20, 24, 28, 44, 50) by curing raw material at specific positions within one layer,
- wherein the positions where raw material is to be cured are determined in a data set;
- wherein at least in specific layers at least one further raw material or a further structure (18, 22, 26, 30, 46, 52) are used in addition to the first raw material and the first structure, respectively, for constituting the object,
**characterized in that**
- the data set is based on a description of the object to be assembled using surfaces of volumes of the same structure and an allocation of structural parameters to the surfaces, and consists of a single compressed file.

2. The method according to claim 1, **characterized in that** the data set for each layer (32, 42, 48) to be constituted contains information on the outline of an area, which is at least partially to be filled with a specific raw material.

3. The method according to claim 2, **characterized in that** in the data set, a specific texture determining the dispersion of the material or the curing in the area is allocated to each area of a layer.

4. The method according to any one of claims 1 to 3, **characterized in that** the data set is obtained from an existing volume data set describing the object, in particular from an STL file, by means of identifying or defining subvolumes with similar structures.

5. The method according to any one of claims 1 to 4, **characterized in that** the at least two raw materials are applied onto or inserted into a substrate by means of a number of nozzles corresponding to the number of raw materials.

6. The method according to any one of claims 1 to 5, **characterized in that** at least one of the raw materials is a paste-like material or a material that is liquefiable by means of a temperature change.

7. The method according to any one of claims 1 to 6, **characterized in that** at least one of the raw materials is a liquid material that is curable by means of supplying energy, in particular in the form of electromagnetic waves.

8. A device for manufacturing a three-dimensional object (10, 40, 60) from materials of various types and/or with various types of structures (12, 14, 36, 38, 62, 64) by means of rapid prototyping / rapid manufacturing,
- wherein the device is adapted for constituting the object layer by layer from a first raw material (16, 20, 24, 28, 44, 50) and can cure raw material at specific positions within one layer,
- wherein the device is automatically controlled via a data set in which the positions where raw material is to be cured are determined and
- wherein the device can apply and, if required, can cure, at least in specific layers, at least one further raw material or a further structure (18, 22, 26, 30, 46, 52) in addition to the first raw material and the first structure, respectively, for the constitution of the object and
**characterized in that**
- the data set is based on a description of the object to be assembled using surfaces of volumes of the same structure and an allocation of structural parameters to the surfaces, and consists of a single compressed file.

9. The device according to claim 8, **characterized in that** a number of nozzles for applying raw material onto a substrate in order to constitute the object to be assembled is provided, which corresponds to the number of raw materials used.

10. The device according to claim 8, **characterized in that** means for supplying energy, in particular in the form of electromagnetic waves, for curing a raw material used for the assembly of the object are provided.

11. A computer program for controlling a device according to any one of claims 8 to 10, **characterized in that** the computer program contains control commands for carrying out a method according to any of claims 1 to 7.

## Revendications

1. Procédé de fabrication d'un objet tridimensionnel (10, 40, 60) à partir de matières différentes et/ou ayant des structures différentes (12, 14, 36, 38, 62, 64), au moyen du prototypage rapide / de la fabrication rapide, dans lequel
- ledit objet est réalisé par couches dans une première matière brute et avec une première structure (16, 20, 24, 28, 44, 50), par le fait que de la matière brute est amenée à durcir à des endroits déterminés au sein d'une couche,
- lesdits endroits où de la matière brute doit être amenée à durcir sont déterminés dans un jeu de données et,
- au moins dans certaines couches, au moins une autre matière brute ou une autre structure (18, 22, 26, 30, 46, 52) est utilisée, en plus de ladite première matière brute et de ladite première structure respectivement, pour la réalisation dudit objet,
**caractérisé par le fait**
- **que** ledit jeu de données repose sur une description de l'objet à fabriquer par des surfaces de volumes de structure identique et une association de paramètres structurels aux surfaces et se compose d'un seul fichier comprimé.

2. Procédé selon la revendication 1, **caractérisé par le fait que**, pour chaque couche à fabriquer (32, 42, 48), le jeu de données contient des informations relatives au contour d'une surface à remplir, au moins en partie, d'une matière brute déterminée.

3. Procédé selon la revendication 2, **caractérisé par le fait que**, dans ledit jeu de données, une texture déterminée est associée à chaque surface d'une couche, qui détermine la répartition de matière ou le durcissement dans la surface.

4. Procédé selon l'une quelconque des revendications 1 à 3, **caractérisé par le fait que** ledit jeu de données est obtenu à partir d'un jeu existant de données de volume décrivant l'objet, en particulier d'un fichier STL, en déterminant ou définissant des sous-volumes de structure identique.

5. Procédé selon l'une quelconque des revendications 1 à 4, **caractérisé par le fait que** lesdites au moins deux matières brutes sont appliquées sur ou bien introduites dans un support au moyen d'un nombre de buses correspondant au nombre de matières brutes.

6. Procédé selon l'une quelconque des revendications 1 à 5, **caractérisé par le fait que** l'une au moins des matières brutes est une matière pâteuse ou apte à être liquéfiée par un changement de température.

7. Procédé selon l'une quelconque des revendications 1 à 6, **caractérisé par le fait que** l'une au moins des matières brutes est une matière liquide apte à être durcie par une alimentation d'énergie, en particulier sous forme d'ondes électromagnétiques.

8. Dispositif de fabrication d'un objet tridimensionnel (10, 40, 60) à partir de matières différentes et/ou ayant des structures différentes (12, 14, 36, 38, 62, 64), au moyen du prototypage rapide / de la fabrication rapide,
- ledit dispositif étant adapté pour réaliser par couches ledit objet dans une première matière brute (16, 20, 24, 28, 44, 50) et étant apte à amener de la matière brute à durcir à des endroits déterminés au sein d'une couche,
- ledit dispositif étant commandé automatiquement par un jeu de données dans lequel sont déterminés les endroits où de la matière brute doit être amenée à durcir, et
- ledit dispositif étant apte à appliquer, au moins dans certaines couches, au moins une autre matière brute ou une autre structure (18, 22, 26, 30, 46, 52), en plus de ladite première matière brute et de ladite première structure respectivement, pour la réalisation dudit objet, et, le cas échéant, à durcir celle-ci, et
**caractérisé par le fait**
- **que** ledit jeu de données repose sur une description de l'objet à fabriquer par des surfaces de volumes de structure identique et une association de paramètres structurels aux surfaces et se compose d'un seul fichier comprimé.

9. Dispositif selon la revendication 8, **caractérisé par le fait que** l'on prévoit un nombre de buses pour l'application de matière brute sur un support en vue de la réalisation de l'objet à fabriquer, qui correspond au nombre de matières brutes à utiliser.

10. Dispositif selon la revendication 8, **caractérisé par le fait que** l'on prévoit des moyens d'alimentation en énergie, en particulier sous forme d'ondes électromagnétiques, pour le durcissement d'une matière brute utilisée pour la fabrication dudit objet.

11. Programme d'ordinateur destiné à commander un dispositif selon l'une quelconque des revendications 8 à 10, **caractérisé par le fait que** ledit programme d'ordinateur comprend des instructions de commande pour la mise en oeuvre d'un procédé selon l'une quelconque des revendications 1 à 7.
